# EUROPEAN PATENT APPLICATION

(11) **EP 4 529 279 A1**
(43) Date of publication of application: **26.03.2025**
(21) Application number: 22941983.3
(22) Date of filing: 17.05.2022
(51) Int. Cl.: H04W 36/34

(54) **DATA FORWARDING INFORMATION TRANSMISSION METHOD AND APPARATUS**

(71) Applicant: Beijing Xiaomi Mobile Software Co., Ltd., Beijing 100085 (CN)
(72) Inventor: WU, Yumin, Beijing 100085 (CN); XIONG, Yi, Beijing 100085 (CN)
(74) Representative: Stöckeler, Ferdinand
(86) International application number: PCT/CN2022/093406
(87) International publication number: WO 2023/220941

(57) **Abstract**

Disclosed in embodiments of the present application are a data forwarding information transmission method and an apparatus, which can be applied to a communication system. The method comprises: a first node can send data forwarding information to a second node according to a set trigger event. In the embodiments of the present application, by means of negotiation between network nodes, when a network updates pre-configured cell or cell group configuration, data can be quickly transmitted by means of functions such as data forwarding and path conversion, and data forwarding and path conversion can be performed when a plurality of cell groups are changed simultaneously.

## Description

### TECHNICAL FIELD

The disclosure relates to the field of data processing technologies, and more particularly relates to a method for transmitting data forwarding information and a communication device.

### BACKGROUND

Now, in a 5th Generation (5G) mobile communication technology system, a network provides a terminal with "a pre-configured cell (or cell group)" for cell (or cell group) selective activation. How to forward associated uplink or downlink transmission data and select a transmission path to reduce data transmission delay is a problem that needs to be solved.

### SUMMARY

Embodiments of the disclosure provide methods for transmitting data forwarding information and communication devices. Through negotiation between network nodes, when a network updates a pre-configured cell or cell group configuration, fast data transmission can be achieved through data forwarding, path switching and other functions. The data forwarding and path switching can be performed in the case where several cell groups are changed simultaneously.

According to a first aspect of embodiments of the disclosure, a method for transmitting data forwarding information is provided. The method is performed by a first node, and includes:
sending data forwarding information to a second node according to a predetermined trigger event.

In this embodiment of the disclosure, the first node sends the data forwarding information to the second node according to the predetermined trigger event, which can realize fast data transmission.

According to a second aspect of embodiments of the disclosure, a method for transmitting data forwarding information is provided. The method is performed by a second node, and includes:

receiving data forwarding information sent by a first node according to a predetermined trigger event.

In this embodiment of the disclosure, the second node receives the data forwarding information sent by the first node according to the predetermined trigger event, which can realize fast data transmission.

According to a third aspect of embodiments of the disclosure, a communication device is provided. The communication device has an ability to implement part or all of the functions of the terminal in the method described in the first aspect. For example, the communication device may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above methods. The transceiver module is configured to support communication between the communication device and other devices. The communication device may further include a storage module coupled to the transceiver module and the processing module, and is configured to store necessary computer programs and data for the communication device.

As an example, the processing module may be a processor. The transceiver module may be a transceiver or a communication interface. The storage module may be a memory.

According to a fourth aspect of embodiments of the disclosure, another communication device is provided. The communication device has an ability to implement part or all of the functions of the network device in the method embodiments described in the second aspect. For example, the communication device may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication device includes: a transceiver module and a processing module. The processing module is configured to support the communication device to perform corresponding functions in the above methods. The transceiver module is configured to support communication between the communication device and other devices. The communication device may further include a storage module coupled to the transceiver module and the processing module, and is configured to store necessary computer programs and data for the communication device.

According to a fifth aspect of embodiments of the disclosure, a communication device is provided. The communication device includes: a processor. When the processor calls a computer program stored in a memory, the method described in the first aspect above is implemented.

According to a sixth aspect of embodiments of the disclosure, a communication device is provided. The communication device includes: a processor. When the processor calls a computer program stored in a memory, the method described in the second aspect above is implemented.

According to a seventh aspect of embodiments of the disclosure, a communication device is provided. The communication device includes: a processor and a memory having a computer program stored thereon. The processor executes the computer program stored in the memory, to cause the communication device to implement the method described in the first aspect above.

According to an eighth aspect of embodiments of the disclosure, a communication device is provided. The communication device includes: a processor and a memory having a computer program stored thereon. The processor executes the computer program stored in the memory, to cause the communication device to implement the method described in the second aspect above.

According to a ninth aspect of embodiments of the disclosure, a communication device is provided. The communication device includes: a processor and an interface circuit. The interface circuit is configured to receive code instructions and send them to the processor. The processor is configured to run the code instructions to cause the communication device to perform the method described in the first aspect above.

According to a tenth aspect of embodiments of the disclosure, a communication device is provided. The communication device includes: a processor and an interface circuit. The interface circuit is configured to receive code instructions and send them to the processor. The processor is configured to run the code instructions to cause the communication device to perform the method described in the second aspect above

According to an eleventh aspect of embodiments of the disclosure, a communication system for transmitting data forwarding information is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium is provided. The computer-readable storage medium is configured to store instructions used by the above terminal. When the instructions are executed, the terminal is caused to implement the method of the first aspect.

According to a thirteenth aspect of embodiments of the disclosure, a computer-readable storage medium is provided. The computer-readable storage medium is configured to store instructions used by the above network device. When the instructions are executed, the network device is caused to implement the method of the second aspect.

According to a fourteenth aspect of embodiments of the disclosure, a computer program product including a computer program is provided. When the computer program is run by a computer, the computer is caused to implement the method of the first aspect.

According to a fifteenth aspect of embodiments of the disclosure, a computer program product including a computer program is provided. When the computer program is run by a computer, the computer is caused to implement the method of the second aspect.

According to a sixteenth aspect of embodiments of the disclosure, a chip system is provided. The chip system includes at least one processor and an interface, for supporting the terminal in realizing the functions involved in the first aspect, e.g., determining or processing at least one of data and information involved in the method described above. In a possible design, the chip system further includes a memory, which is configured to store necessary computer programs and data for the terminal. The chip system may consist of chips or may include a chip and other discrete devices.

According to a seventeenth aspect of embodiments of the disclosure, a chip system is provided. The chip system includes at least one processor and an interface, for supporting the network device in realizing the functions involved in the second aspect, e.g., determining or processing at least one of data and information involved in the method described above. In a possible design, the chip system further includes a memory, which is configured to store necessary computer programs and data for the network device. The chip system may consist of chips or may include a chip and other discrete devices.

According to an eighteenth aspect of embodiments of the disclosure, a computer program is provided. When the computer program runs on a computer, the computer is caused to implement the method of the first aspect.

According to a nineteenth aspect of embodiments of the disclosure, a computer program is provided. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a structural diagram of a communication system provided by an embodiment of the disclosure.
FIG. 2 is a flowchart of a method for transmitting data forwarding information provided by an embodiment of the disclosure.
FIG. 3 is a flowchart of a method for transmitting data forwarding information provided by an embodiment of the disclosure.
FIG. 4 is a schematic diagram of different bearer types in a cell group provided by an embodiment of the disclosure.
FIG. 5 is a flowchart of a method for transmitting data forwarding information provided by an embodiment of the disclosure.
FIG. 6 is a flowchart of a method for transmitting data forwarding information provided by an embodiment of the disclosure.
FIG. 7 is a flowchart of a method for transmitting data forwarding information provided by an embodiment of the disclosure.
FIG. 8 is a flowchart of a method for transmitting data forwarding information provided by an embodiment of the disclosure.
FIG. 9 is a flowchart of a method for transmitting data forwarding information provided by an embodiment of the disclosure.
FIG. 10 is a flowchart of a method for transmitting data forwarding information provided by an embodiment of the disclosure.
FIG. 11 is a flowchart of a method for transmitting data forwarding information provided by an embodiment of the disclosure.
FIG. 12 is a flowchart of a method for transmitting data forwarding information provided by an embodiment of the disclosure.
FIG. 13 is a flowchart of a method for transmitting data forwarding information provided by an embodiment of the disclosure.
FIG. 14 is a flowchart of a method for transmitting data forwarding information provided by an embodiment of the disclosure.
FIG. 15 is a structural diagram of a communication device provided by an embodiment of the disclosure.
FIG. 16 is a structural diagram of a communication device provided by an embodiment of the disclosure.
FIG. 17 is a structural diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining that".

For the purposes of brevity and ease of understanding, the terms "greater than" or "less than", "higher than" or "lower than" are used herein to represent size relationships. Those skilled in the art understand that the term "greater than" also covers the meaning of "greater than or equal to" and the term "less than" also covers the meaning of "less than or equal to", and the term "higher than" also covers the meaning of "higher than or equal to", and the term "lower than" also covers the meaning of "lower than or equal to".

For ease of understanding, the terms involved in the disclosure are first introduced.

Data forwarding is implemented in a radio link control acknowledged mode (RLC AM). In order to prevent packet loss, during handover, after determining that a terminal has switched to a target cell, a source cell may send a data link packet data convergence protocol service data unit (DL PDCP SDU) that has not been confirmed by the terminal to the target cell to which the terminal has switched, and forward data that has just arrived at the source cell from a core network and has not been assigned a sequence number to the target cell, to ensure data consistency.

Under multi-radio dual connectivity (MR-DC), the terminal can use radio resources provided by two different schedulers. The two schedulers are located on two different nodes, one as a master node (MN) and the other as a secondary node (SN). The MN and the SN may be connected via a network interface, and at least the MN is connected to the core network. Each primary secondary cell (PSCell) or secondary cell group (SCG) corresponds to one SN, and each Primary Cell (PCell) or master cell group (MCG) corresponds to one MN.

In a 5G system, dual connectivity (DC) architecture is adopted. The DC architecture includes two cell groups, i.e., an MCG corresponding to an MN on a network, and an SCG corresponding to an SN on the network. The MCG includes one PCell and one or more secondary cells (SCells). The SCG includes one PSCell and one or more SCells. The PCell and the PSCell may be collectively referred to as a special cell (SpCell).

In order to better understand the methods for transmitting data forwarding information disclosed in the embodiments of the disclosure, the communication system to which the embodiments of the disclosure are applicable is first described below.

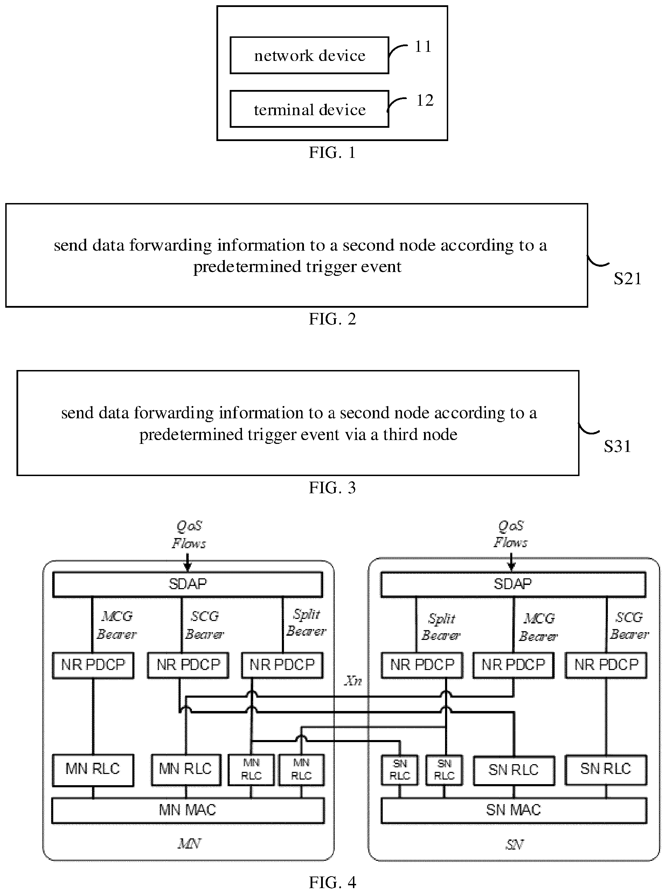

As illustrated in FIG. 1, FIG. 1 is a structural diagram of a communication system provided by an embodiment of the disclosure. The communication system may include, but is not limited to, a network device and a terminal. The number and the form of devices illustrated in FIG. 1 are only for examples and do not constitute a limitation on the embodiments of the disclosure, and two or more network devices and two or more terminals may be included in practical applications. The communication system illustrated in FIG. 1 includes, for example, a network device 101 and a terminal 102.

It is noteworthy that the technical solutions of embodiments of the disclosure may be applied to various communication systems, such as, a long term evolution (LTE) system, a 5th generation (5G) mobile communication system, a 5G new radio (NR) system, or other future new mobile communication systems. It should be noted that a sidelink in the embodiments of the disclosure may also be referred to as side link or SL.

The network device 101 in embodiments of the disclosure is an entity on a network for sending or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to embodiments of the disclosure may be composed of a central unit (CU) and distributed units (DUs). The CU may also be called a control unit. The use of CU-DU structure allows to divide a protocol layer of the network device, such as a base station, such that some functions of the protocol layer are placed in the CU for centralized control, and some or all of the remaining functions of the protocol layer are distributed in the DUs, and the DUs are centrally controlled by the CU.

The terminal 102 in embodiments of the disclosure is an entity on a user side for receiving or sending signals, such as a cellular phone. The terminal may also be referred to as a terminal, a user equipment (UE), a mobile station (MS), a mobile terminal (MT), and the like. The terminal can be a car with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in embodiments of the disclosure.

For SL communication, there are 4 SL transmission modes. SL transmission mode 1 and SL transmission mode 2 are used for device-to-device (D2D) communication. SL transmission mode 3 and SL transmission mode 4 are used for vehicle to everything (V2X) communication. When SL transmission mode 3 is adopted, resource allocation is scheduled by the network device 101. In detail, the network device 101 may send resource allocation information to the terminal 102, and then the terminal 102 allocates resources to the other terminal, so that the other terminal can send information to the network device 101 using the allocated resources. In the V2X communication, a terminal with better signal or higher reliability may be used as the terminal 102. The first terminal in embodiments of the disclosure may refer to the terminal 102, and the second terminal may refer to the other terminal.

It is understandable that the communication system described in embodiments of the disclosure is intended to clearly illustrate the technical solutions according to embodiments of the disclosure, and does not constitute a limitation on the technical solutions according to embodiments of the disclosure. It is understandable by those skilled in the art that as system architectures evolve and new business scenarios emerge, the technical solutions according to embodiments of the disclosure are also applicable to similar technical problems.

Methods for transmitting data forwarding information and communication devices provided in the disclosure are described in detail below in combination with the accompanying drawings.

As illustrated in FIG. 2, FIG. 2 is a flowchart of a method for transmitting data forwarding information provided by an embodiment of the disclosure. The method is performed by a first node. As illustrated in FIG. 2, the method includes, but is not limited to, the following steps.

At step S21, data forwarding information is sent to a second node according to a predetermined trigger event.

It should be noted that the trigger event is not limited in the disclosure and can be selected according to actual conditions.

Optionally, the trigger event may be predetermined as SCG selective activation, MCG selective activation, simultaneous MCG and SCG selective activation, or a simultaneous conditional triggered mobility procedure of MCG and SCG.

The network may provide a candidate cell or candidate cell group configuration to the terminal.

Optionally, the cell type of the candidate cell includes at least one of: PCell, PSCell, SpCell, SCell, SpCell, MCG SCell, or SCG SCell. For a special candidate cell, there are many possible cell types.

Optionally, for a candidate cell, the cell type of the candidate cell may be determined based on a network indication or protocol agreements.

Optionally, the candidate cell group includes at least one of an MCG or an SCG. For a specific candidate cell group, there are many possible cell group types.

Optionally, for a candidate cell group, the cell group type of the candidate cell group may be determined based on a network indication or protocol agreements.

The network may negotiate a transmission path of user plane data, i.e., data radio bearer (DRB), via network nodes.

It should be noted that the specific method of sending the data forwarding information to the second node according to the predetermined trigger event is not limited in the disclosure and can be selected according to actual conditions.

Optionally, the first node may directly send the data forwarding information to the second node according to the trigger event. Optionally, the first node may send the data forwarding information to the second node via a third node.

It should be noted that the first node is not limited in the disclosure and can be selected according to actual conditions.

Optionally, the first node is one of a source MN, a source SN, an anchor base station, an anchor MN or an anchor SN.

It should be noted that the second node is not limited in the disclosure and can be selected according to actual conditions.

Optionally, the second node may be a source MN or a source SN.

It should be noted that after obtaining the trigger event, further agreement may be made on the trigger event. The trigger event also includes any one of the following trigger conditions, which means triggering when any one of the following conditions is met.

Optionally, the trigger condition is met if the first node receives a "cell group selective activation candidate acknowledgement message" sent by a Node B.

For example, the first node sends a "cell group selective activation candidate request message" to the second node, the second node accepts the request and sends the "cell group selective activation candidate acknowledgement message" to the first node.

Optionally, the trigger condition is met before, after, or at the time the first node sends a "candidate cell or candidate cell group configuration activation command". The "candidate cell or candidate cell group configuration activation command" is a command sent to the terminal.

Optionally, the trigger condition is met when the first node receives a "candidate cell or candidate cell group configuration activation acknowledgement message" from the second node.

For example, the first node sends a "candidate cell or candidate cell group configuration activation command" to the terminal. For another example, the terminal activates a "candidate cell or candidate cell group" configuration by itself according to the trigger event. After the "candidate cell or candidate cell group" configuration is activated, the second node sends a "candidate cell or candidate cell group configuration activation acknowledgement message" to the first node.

Optionally, the data forwarding information may be determined as data path identification information of a terminal, a data bearer identity (ID), a data bearer type, or data transmission status information.

In the embodiments of the disclosure, after the trigger event is met, the first node may send the data forwarding information to the second node according to the predetermined trigger event.

In the embodiments of the disclosure, the first node sends the data forwarding information to the second node according to the predetermined trigger event. Through negotiation between the network nodes, when the network updates a pre-configured cell or cell group configuration, fast data transmission can be achieved through data forwarding, path switching and other functions. The data forwarding and path switching can be performed in the case where several cell groups are changed simultaneously.

As illustrated in FIG. 3, FIG. 3 is a flowchart of a method for transmitting data forwarding information provided by an embodiment of the disclosure. The method is performed by a first node. As illustrated in FIG. 3, the method may include, but is not limited to, the following steps.

At step S31, data forwarding information is sent to a second node according to a predetermined trigger event via a third node.

It should be noted that the introduction of the trigger event in the disclosure can be found in the relevant contents of the above embodiments, which will not be repeated here. The trigger event is not limited in the disclosure and can be selected according to actual conditions.

The network may provide a candidate cell or candidate cell group configuration to the terminal.

Optionally, the cell type of the candidate cell includes at least one of: PCell, PSCell, SpCell, SCell, SpCell, MCG SCell, or SCG SCell. For a special candidate cell, there are many possible cell types.

Optionally, for a candidate cell, the cell type of the candidate cell may be determined based on a network indication or protocol agreements.

Optionally, the candidate cell group includes at least one of an MCG or an SCG. For a specific candidate cell group, there are many possible cell group types.

Optionally, for a candidate cell group, the cell group type of the candidate cell group may be determined based on a network indication or protocol agreements.

The network may negotiate a transmission path of user plane data, i.e., DRB, via network nodes.

The first node may send the data forwarding information to the second node via the third node.

It should be noted that the first node is not limited in the disclosure and can be selected according to actual conditions.

Optionally, the first node is one of a source MN, a source SN, an anchor base station, an anchor MN or an anchor SN.

It should be noted that the second node is not limited in the disclosure and can be selected according to actual conditions.

Optionally, the second node may be a source MN or a source SN.

It should be noted that the third node is not limited in the disclosure and can be selected according to actual conditions.

Optionally, the third node is one of a source MN, an anchor base station, an anchor MN or an anchor SN.

Optionally, the trigger condition is met if the first node receives a "cell group selective activation candidate acknowledgement message" sent by a Node B.

For example, the first node sends a "cell group selective activation candidate request message" to the second node, the second node accepts the request and sends a "cell group selective activation candidate acknowledgement message" to the first node.

Optionally, the trigger condition is met before, after, or at the time the first node sends a "candidate cell or candidate cell group configuration activation command". The "candidate cell or candidate cell group configuration activation command" is a command sent to the terminal.

Optionally, the trigger condition is met when the first node receives a ""candidate cell or candidate cell group" configuration activation acknowledgement message" from the second node.

For example, the first node sends a "candidate cell or candidate cell group configuration activation command" to the terminal. For another example, the terminal activates a "candidate cell or candidate cell group" configuration by itself according to the trigger event. After the "candidate cell or candidate cell group" configuration is activated, the second node sends a "candidate cell or candidate cell group configuration activation acknowledgement message" to the first node.

Optionally, the data forwarding information can be determined as data path identification information of a terminal, a data bearer ID, a data bearer type, or data transmission status information.

In the embodiments of the disclosure, when the trigger event is met, the first node may send the data forwarding information to the second node via the third node.

Optionally, the data forwarding information may be at least one of data path identification information of a terminal, a data bearer ID, a data bearer type, or data transmission status information.

Optionally, the data path identification information of the terminal includes at least one of downlink transmission path identification information or uplink transmission path identification information. The downlink transmission path identification information includes at least one of a first data transmission source address or a first data transmission target address. The uplink transmission path identification information includes at least one of a second data transmission source address or a second data transmission target address.

Optionally, the data bearer ID includes at least one of: a session ID, a data flow ID, a service ID, a transmission path ID, or a logical channel ID.

For example, as illustrated in FIG. 4, the DRB may be classified into different bearer types according to a cell group to which data is sent.

Optionally, the bearer type may be an MCG bearer, an SCG bearer, or a split bearer.

Optionally, the data transmission status information includes at least one of downlink data transmission status information or uplink data transmission status information. The downlink data transmission status information includes at least one of a serial number corresponding to first transmission data or a serial number corresponding to first discarded data in. The uplink data transmission status information includes at least one of a serial number corresponding to second transmission data or a serial number corresponding to second discarded data.

Optionally, the serial number corresponding to the first transmission data and the serial number corresponding to the second transmission data each includes at least one of: an initial transmission data serial number; N serial numbers before the initial transmission data serial number, N being a positive integer; M serial numbers after the initial transmission data serial number, M being a positive integer; or a serial number corresponding to each transmission data. The serial number corresponding to the first discarded data and the serial number corresponding to the second discarded data each includes at least one of: a lower boundary value of serial numbers of discarded data; an upper boundary value of serial numbers of discarded data; or the lower boundary value and the upper boundary value of serial numbers of discarded data.

In the embodiments of the disclosure, the first node sends the data forwarding information to the second node via the third node according to the predetermined trigger event. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

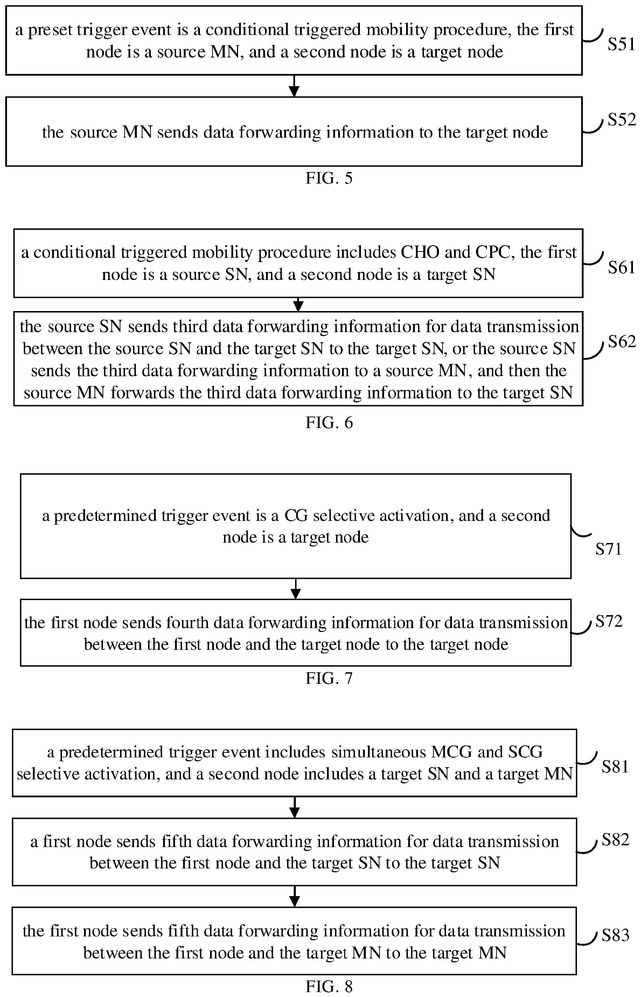

As illustrated in FIG. 5, FIG. 5 is a flowchart of a method for transmitting data forwarding information provided by an embodiment of the disclosure. The method is performed by a first node. As illustrated in FIG. 5, the method may include, but is not limited to, the following steps.

At step S51, a predetermined trigger event is a conditional triggered mobility procedure, the first node is a source MN, and a second node is a target node.

It is noted that the conditional triggered mobility procedure includes conditional handover (CHO), conditional PSCell addition (CPA) or conditional PSCell change (CPC).

At step S52, the source MN sends data forwarding information to the target node.

It should be noted that the introduction of data forwarding information in the disclosure can be found in the relevant contents of the above embodiments and will not be repeated here. The data forwarding information is not limited in the disclosure and can be selected according to actual conditions.

It should be noted that if the first node is a source MN and the second node is a target node, the transmission of data forwarding information from the source MN to the target node is applicable to two different mobility procedures, i.e., CHO and CPA or CHO and CPC.

The process in which the source MN sends the data forwarding information to the target node is illustrated and explained below.

Optionally, for downlink data, data is sent from the source MN to the target SN or from the source MN to the target MN.

Optionally, for uplink data, data is sent from the target SN to the source MN or from the target MN to the source MN.

It should be noted that the specific manner in which the source MN sends the data forwarding information to the target node is not limited in the disclosure and can be selected according to actual conditions.

Optionally, the data forwarding information is first data forwarding information for data transmission between the source MN and the target MN, the target node is the target MN, and the source MN sends the first data forwarding information to the target MN.

Optionally, the data forwarding information is second data forwarding information for data transmission between the source MN and the target SN, the target node is the target SN, and the source MN sends second data forwarding information directly to the target SN, or the source MN sends the second data forwarding information to the target MN, and then the target MN forwards the second data forwarding information to the target SN.

The following is an example of a process in which the source MN sends the data forwarding information to the target node when the trigger event condition is changed to the CHO and CPA mobility procedure.

For downlink data, data is sent from the source MN to the target SN or from the source MN to the target MN.

For uplink data, data is sent from the target SN to the source MN or from the target MN to the source MN.

At step a, a source MN (first node) sends data forwarding information to a target node (second node).

The method for transmitting data forwarding information includes at least one of: the source MN sending data forwarding information for data transmission between the source MN and the target MN to the target MN; the source MN sending data forwarding information for data transmission between the source MN and the target SN to the target SN; or the source MN sending data forwarding information for data transmission between the source MN and the target SN to the target MN.

The data forwarding information includes at least one of:
data path identification information of a terminal, in which the data path identification information of the terminal includes at least one of downlink transmission path identification information or uplink transmission path identification information, the downlink transmission path identification information includes at least one of a data transmission source address or a data transmission target address, and the uplink transmission path identification information includes at least one of a data transmission source address or a data transmission target address;
a bearer ID, in which the bearer ID includes at least one of: a session ID, a data flow ID (e.g., a quality of service (QoS) flow ID), a service ID (e.g., a temporary mobile group identity (TMGI)), a transmission path ID (e.g., an MCG transmission path or an SCG transmission path); or a logical channel ID;
a bearer type, in which the bearer type includes at least one of: an MCG bearer, an SCG bearer, or a split bearer;
downlink data transmission status information, in which the information includes at least one of a serial number corresponding to transmission data or a serial number corresponding to discarded data. The serial number corresponding to transmission data includes at least one of a PDCP serial number, a PDCP hyper frame number (HFN) or a PDCP COUNT. The serial number corresponding to transmission data includes at least one of: an initial transmission data serial number, an adjacent serial number before the initial transmission data serial number (e.g., if the initial transmission data serial number is N, this serial number is (N-1)); an adjacent serial number after the initial transmission data serial number (e.g., if the initial transmission data serial number is N, this serial number is (N+1)); or a serial number corresponding to each transmission data (e.g., the serial numbers are identified by a bitmap, i.e., each bit indicates one serial number). The serial number corresponding to discarded data includes any one of: a lower boundary value of serial numbers of discarded data (e.g., if the serial number is greater than or equal to this lower boundary value, the corresponding data shall be discarded), an upper boundary value of serial numbers of discarded data (e.g., if the serial number is lower than or equal to this upper boundary value, the corresponding data shall be discarded), or the lower boundary value and the upper boundary value of serial numbers of discarded data (e.g., if the serial number is greater than or equal to this lower boundary value and is lower than or equal to this upper boundary value, the corresponding data shall be discarded); or
uplink data transmission status information, in which the information includes at least one of: a serial number corresponding to transmission data (as described above) or a serial number corresponding to discarded data (as described above), which is not repeated herein.

At step b, when a source MN sends data forwarding information for data transmission between the source MN and a target SN to a target MN, the target MN forwards the data forwarding information for data transmission between the source MN and the target SN to the target SN.

The following is an example of the process in which the source MN sends the data forwarding information to the target node for the trigger event condition of CHO and CPC mobility procedure.

For downlink data, data is sent from the source MN to the target SN, or data is sent from the source MN to the target MN, or data is sent from the source SN to the target SN, or data is sent from the source SN to the source MN and then forwarded by the source MN to the target SN.

For uplink data, data is sent from the target SN to the source MN, or data is sent from the target MN to the source MN, or data is sent from the target SN to the source SN, or data is sent from the target SN to the source MN and then forwarded by the source MN to the source SN.

It should be noted that the introduction of the data forwarding information in the disclosure can be found in the relevant contents in the above embodiments, and will not be repeated herein. The data forwarding information is not limited in the disclosure and can be selected according to actual conditions

The following is an explanation of a MN data forwarding method.

At step a, a source MN (first node) sends data forwarding information to a target node (second node).

At step b, when the source MN sends data forwarding information for data transmission between the source MN and a target SN to a target MN, the target MN forwards the data forwarding information for data transmission between the source MN and the target SN to the target SN.

The SN data forwarding method is explained below.

At step a, a source SN sends data forwarding information for data transmission between the source SN and a target SN to a source MN.

At step b, the source MN sends the data forwarding information for data transmission between the source SN and the target SN to the target SN according to step a.

In the embodiments of the disclosure, the predetermined trigger event is a conditional triggered mobility procedure. When the first node is a source MN, and the second node is a target node, the source MN sends the data forwarding information to the target node. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

As illustrated in FIG. 6, FIG. 6 is a flowchart of a method for transmitting data forwarding information provided by an embodiment of the disclosure. The method is performed by a first node. As illustrated in FIG. 6, the method may include, but is not limited to, the following steps.

At step S61, a conditional triggered mobility procedure includes CHO and CPC, the first node is a source SN, and a second node is a target SN.

It should be noted that when the first node is a source SN and the second node is a target SN, sending third data forwarding information from the source SN to the target SN is applicable to the CHO and CPC mobility procedures.

At step S62, the source SN sends the third data forwarding information for data transmission between the source SN and the target SN to the target SN, or the source SN sends the third data forwarding information to a source MN, and then the source MN forwards the third data forwarding information to the target SN.

It should be noted that the introduction of the data forwarding information in the disclosure can be found in the relevant contents in the above embodiments, and will not be repeated here. The data forwarding information is not limited in the disclosure and can be selected according to actual conditions.

It is noted that the specific manner for sending the data forwarding information from the source MN to the target node is not limited in the disclosure and can be selected according to actual conditions.

The process of sending the third data forwarding information from the source MN to the target SN is explained below.

Optionally, for downlink data, data is sent from the source MN to the target SN, or data is sent from the source MN to the target MN, or data is sent from the source SN to the target SN, or data is sent from the source SN to the source MN and then forwarded by the source MN to the target SN.

Optionally, for uplink data, data is sent from the target SN to the source MN, or data is sent from the target MN to the source MN, or data is sent from the target SN to the source SN, or data is sent from the target SN to the source MN and then forwarded by the source MN to the source SN.

It is noted that the specific manner for sending the third data forwarding information from the source MN to the target SN is not limited in the disclosure and can be selected according to actual conditions.

Optionally, the source SN sends the third data forwarding information for data transmission between the source SN and the target SN to the target SN.

Optionally, the source SN sends the third data forwarding information to the source MN, and the source MN forwards the third data forwarding information to the target SN.

In the embodiments of the disclosure, the conditional triggered mobility procedure includes CHO and CPC, the first node is a source SN, and the second node is a target SN, the source SN sends the third data forwarding information for data transmission between the source SN and the target SN to the target SN, or the source SN sends the third data forwarding information to a source MN, and the source MN forwards the third data forwarding information to the target SN, which can realize fast data transmission.

As illustrated in FIG. 7, FIG. 7 is a flowchart of a method for transmitting data forwarding information provided by an embodiment of the disclosure. The method is performed by a first node. As illustrated in FIG. 7, the method may include, but is not limited to, the following steps.

At step S71, a predetermined trigger event is a CG selective activation, and a second node is a target node.

It should be noted that if the trigger event is the CG selective activation, the trigger event may be either an SCG selective activation or an MCG selective activation.

Optionally, when the predetermined trigger event is SCG selective activation, the target node is a target SN. Optionally, when predetermined trigger event is an MCG selective activation, the target node is a target MN.

At step S72, the first node sends fourth data forwarding information for data transmission between the first node and a target node to the target node.

It is noted that the first node is not limited in the disclosure and can be selected according to actual conditions.

Optionally, the first node may be a source MN, a source SN, an anchor base station, an anchor MN, or an anchor SN.

In an embodiment of the disclosure, the predetermined trigger event is SCG selective activation. Optionally, for downlink data, data is sent by a source MN, a source SN, an anchor base station, an anchor MN, or an anchor SN to a target SN. Optionally, for uplink data, data is sent by a target SN to a source MN, a source SN, an anchor base station, an anchor MN, or an anchor SN.

In an embodiment of the disclosure, the predetermined trigger event is MCG selective activation. Optionally, for downlink data, data is sent by a source MN, a source SN, an anchor base station, an anchor MN, or an anchor SN to a target MN. Optionally, for uplink data, data is sent by a target MN to a source MN, a source SN, an anchor base station, an anchor MN, or an anchor SN.

It is noted that the specific manner in which the first node sends the fourth data forwarding information for data transmission between the first node and the target node to the target node is not limited in the disclosure and can be selected according to actual conditions.

Optionally, if the first node is a source node such as a source MN or a source SN, the source node sends the fourth data forwarding information to a third node, and the third node forwards the fourth data forwarding information to the target node.

Optionally, if the first node is a source MN, a source SN, an anchor base station, an anchor MN, or an anchor SN, the first node (the source MN/the source SN/the anchor base station/the anchor MN/the anchor SN) sends data forwarding information (the fourth data forwarding information) for data transmission between the first node (the source MN/the source SN/the anchor base station/the anchor MN/the anchor SN) and a target SN to the target SN.

As a possible implementation, if the source node is a source MN, the source MN sends the fourth data forwarding information to a third node. The third node is either an anchor base station or an anchor MN.

For example, if the source node is a source MN, the source MN sends the data forwarding information (the fourth data forwarding information) for data transmission between the source MN and a target SN to a third node (an anchor base station/an anchor MN), and the third node (the anchor base station/the anchor MN) sends the data forwarding information (the fourth data forwarding information) for data transmission between the source MN and the target SN to the target SN.

As a possible implementation, if the source node is a source SN, the source SN sends the fourth data forwarding information to a third node. The third node is one of a source MN, an anchor base station, an anchor MN, or an anchor SN.

For example, if the source node is a source SN, the source SN sends the data forwarding information (the fourth data forwarding information) for data transmission between the source SN and a target SN to a third node (a source MN/an anchor base station/an anchor MN/an anchor SN), and the third node (the source MN/the anchor base station/the anchor MN/the anchor SN) forwards the data forwarding information (the fourth data forwarding information) to the target SN.

In embodiments of the disclosure, the predetermined trigger event is CG selective activation, if the second node is a target node, the first node sends the fourth data forwarding information for data transmission between the first node and the target node to the target node, which can realize fast data transmission.

The following is an example with the trigger event of SCG selective activation.

For downlink data, data is sent from a first node (a source MN/a source SN/an anchor base station/an anchor MN/an anchor SN) to a target SN (a second node).

For uplink data, data is sent from a target SN (a second node) to a first node (a source MN/a source SN/an anchor base station/an anchor MN/an anchor SN).

A first node (a source MN/a source SN/an anchor base station/an anchor MN/an anchor SN) sends the data forwarding information for data transmission between the first node (the source MN/the source SN/the anchor base station/the anchor MN/the anchor SN) and a target SN to the target SN (a second node).

A first node (a source SN) sends the data forwarding information for data transmission between the first node (the source SN) and a target SN to a third node (a source MN/an anchor base station/an anchor MN/an anchor SN), and the third node (the source MN/the anchor base station/the anchor MN/the anchor SN) sends the data forwarding information for data transmission between the source SN and the target SN to the target SN (a second node).

A first node (a source MN) sends the data forwarding information for data transmission between the source MN and a target SN to a third node (an anchor base station or an anchor MN), and the third node (the anchor base station or the anchor MN) sends the data forwarding information for data transmission between the source MN and the target SN to the target SN (a second node).

The following is an example with the trigger event of MCG selective activation.

For downlink data, data is sent from a first node (a source MN/a source SN/an anchor base station/an anchor MN/an anchor SN) to a target MN (a second node).

For uplink data, data is sent from a second node (a target MN) to a first node (a source MN/a source SN/ an anchor base station/an anchor MN/an anchor SN).

A first node (a source MN/a source SN/an anchor base station/an anchor MN/an anchor SN) sends the data forwarding information for data transmission between the first node (the source MN/the source SN/the anchor base station/the anchor MN/the anchor SN) and a target MN to a target SN (a second node).

A first node (a source SN) sends the data forwarding information for data transmission between the source SN and a target MN to a third node (a source MN/an anchor base station/an anchor MN/an anchor SN), and the third node (the source MN/the anchor base station/the anchor MN/the anchor SN) sends the data forwarding information for data transmission between the source SN and the target MN to the target MN (a second node).

A first node (a source MN) sends the data forwarding information for data transmission between the source MN and a target MN to a third node (an anchor base station or an anchor MN), and the third node (the anchor base station or the anchor MN) sends the data forwarding information for data transmission between the source MN and the target MN to the target MN (a second node).

As illustrated in FIG. 8, FIG. 8 is a flowchart of a method for transmitting data forwarding information provided by an embodiment of the disclosure. The method is performed by a first node. As illustrated in FIG. 8, the method may include, but is not limited to, the following steps.

At step S81, a predetermined trigger event includes simultaneous MCG and SCG selective activation, and a second node includes a target SN and a target MN.

It is noted that if the predetermined trigger event includes simultaneous MCG and SCG selective activation, the second node includes a target SN and a target MN.

At step S82, a first node sends fifth data forwarding information for data transmission between the first node and the target SN to the target SN.

Optionally, the first node is one of a source MN, a source SN, an anchor base station, an anchor MN or an anchor SN.

Optionally, the first node (a source MN/a source SN/an anchor base station/an anchor MN/an anchor SN) sends data forwarding information (the fifth data forwarding information) for data transmission between the first node (the source MN/the source SN/the anchor base station/the anchor MN/the anchor SN) and a target SN to the target SN.

At step S83, the first node sends the fifth data forwarding information for data transmission between the first node and a target MN to the target MN.

Optionally, the first node is one of a source MN, a source SN, an anchor base station, an anchor MN or an anchor SN.

Optionally, the first node (the source MN/the source SN/ the anchor base station/the anchor MN/the anchor SN) sends the data forwarding information (the fifth data forwarding information) for data transmission between the first node (the source MN/the source SN/ the anchor base station/the anchor MN/the anchor SN) and a target MN to the target MN.

Optionally, if the first node is a source node, for any one of a target SN and a target MN, the source node sends fourth data forwarding information to a third node, and the third node forwards the fourth data forwarding information to a target node.

In embodiments of the disclosure, if the predetermined trigger event is simultaneous MCG and SCG selective activation, and the second node includes a target SN and a target MN, the first node sends the fifth data forwarding information for data transmission between the first node and the target SN to the target SN, and the first node sends the fifth data forwarding information for data transmission between the first node and the target MN, which can realize fast data transmission.

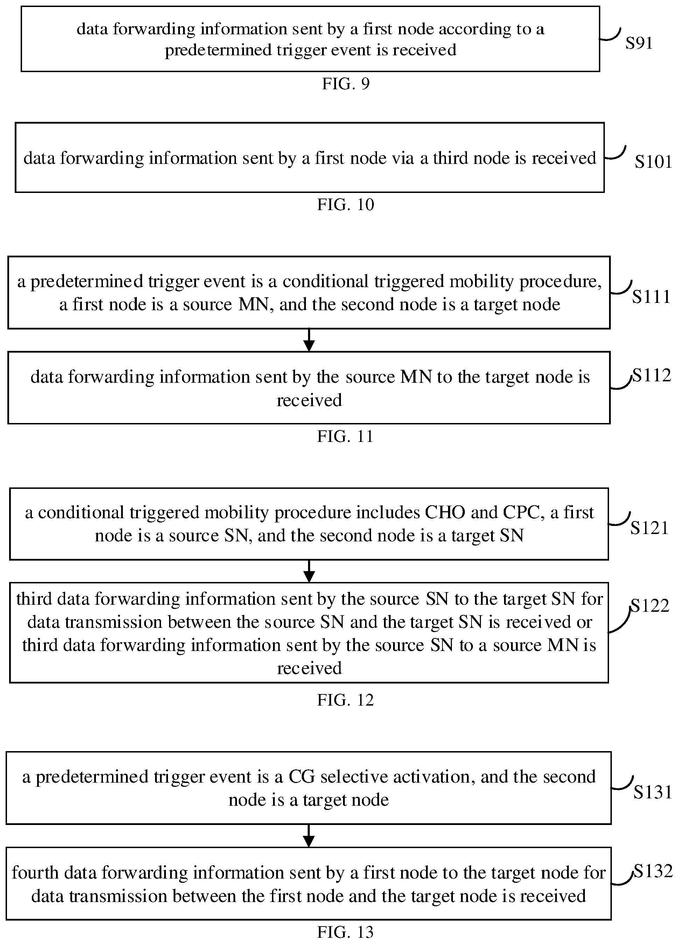

As illustrated in FIG. 9, FIG. 9 is a flowchart of a method for transmitting data forwarding information provided by an embodiment of the disclosure. The method is performed by a second node. As illustrated in FIG. 9, the method may include, but is not limited to, the following steps.

At step S91, data forwarding information sent by a first node according to a predetermined trigger event is received.

It should be noted that the trigger event is not limited in the disclosure and can be selected according to actual conditions.

Optionally, the trigger event may be set as SCG selective activation, MCG selective activation, simultaneous MCG and SCG selective activation, or a simultaneous conditional triggered mobility procedure of MCG and SCG.

The network may provide a candidate cell or candidate cell group configuration to the terminal.

Optionally, the cell type of the candidate cell includes at least one of: PCell, PSCell, SpCell, SCell, SpCell, MCG SCell, or SCG SCell. For a special candidate cell, there are many possible cell types.

Optionally, for a candidate cell, the cell type of the candidate cell may be determined based on a network indication or protocol agreements.

Optionally, the candidate cell group includes at least one of an MCG or an SCG. For a specific candidate cell group, there are many possible cell group types.

Optionally, for a candidate cell group, the cell group type of the candidate cell group may be determined based on a network indication or protocol agreements.

The network may negotiate a transmission path of user plane data, i.e., DRB, via network nodes.

It should be noted that the specific method of receiving the data forwarding information sent by the first node according to the predetermined trigger event is not limited in the disclosure, and can be selected according to actual conditions.

Optionally, the second node may directly receive the data forwarding information sent by the first node according to the predetermined trigger event according to the trigger event. Optionally, the second node may receive the data forwarding information sent by the first node via the third node.

It should be noted that the first node is not limited in the disclosure and can be selected according to actual conditions.

Optionally, the first node is one of a source MN, a source SN, an anchor base station, an anchor MN or an anchor SN.

It should be noted that the second node is not limited in the disclosure and can be selected according to actual conditions.

Optionally, the second node may be a source MN or a source SN.

It should be noted that after obtaining the trigger event, the trigger event can be further agreed upon. The trigger event also includes any one of the following trigger conditions, i.e., it is triggered when any one of the following conditions is met.

Optionally, the trigger condition is met if the first node receives a "cell group selective activation candidate acknowledgement message" sent by a Node B.

For example, the first node sends a "cell group selective activation candidate request message" to the second node, the second node accepts the request and sends a "cell group selective activation candidate acknowledgement message" to the first node.

Optionally, the trigger condition is met before, after, or at the time the first node sends a "candidate cell or candidate cell group configuration activation command". The "candidate cell or candidate cell group configuration activation command" is a command sent to the terminal.

Optionally, the trigger condition is met when the first node receives a ""candidate cell or candidate cell group" configuration activation acknowledgement message" from the second node.

For example, the first node sends a "candidate cell or candidate cell group configuration activation command" to the terminal. For another example, the terminal activates a "candidate cell or candidate cell group" configuration by itself according to the trigger event. After the "candidate cell or candidate cell group" configuration is activated, the second node sends a "candidate cell or candidate cell group configuration activation acknowledgement message" to the first node.

Optionally, the data forwarding information can be set as data path identification information of a terminal, a data bearer ID, a data bearer type, or data transmission status information.

In this embodiment of the disclosure, after the trigger event is met, the first node may send the data forwarding information to the second node according to the predetermined trigger event, and the second node may receive the data forwarding information sent by the first node according to the predetermined trigger event.

In this embodiment of the disclosure, the second node receives the data forwarding information sent by the first node according to the predetermined trigger event. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

As illustrated in FIG. 10, FIG. 10 is a flowchart of a method for transmitting data forwarding information provided by an embodiment of the disclosure. The method is performed by a second node. As illustrated in FIG. 10, the method may include, but is not limited to, the following steps.

At step S101, data forwarding information sent by a first node via a third node is received.

The network may provide a candidate cell or candidate cell group configuration to the terminal.

Optionally, the cell type of the candidate cell includes at least one of: PCell, PSCell, SpCell, SCell, SpCell, MCG SCell, or SCG SCell. For a special candidate cell, there are many possible cell types.

Optionally, for a candidate cell, the cell type of the candidate cell may be determined based on a network indication or protocol agreements.

Optionally, the candidate cell group includes at least one of an MCG or an SCG. For a specific candidate cell group, there are many possible cell group types.

Optionally, for a candidate cell group, the cell group type of the candidate cell group may be determined based on a network indication or protocol agreements.

The network may negotiate a transmission path of user plane data, i.e., DRB, via network nodes.

The first node may send the data forwarding information to the second node via the third node, and the second node receives the data forwarding information sent by the first node via the third node.

It should be noted that the first node is not limited in the disclosure and can be selected according to actual conditions.

Optionally, the first node is one of a source MN, a source SN, an anchor base station, an anchor MN or an anchor SN.

It should be noted that the second node is not limited in the disclosure and can be selected according to actual conditions.

Optionally, the second node may be a source MN or a source SN.

It should be noted that the third node is not limited in the disclosure and can be selected according to actual conditions.

Optionally, the third node is one of a source MN, an anchor base station, an anchor MN or an anchor SN.

Optionally, the trigger condition is met if the first node receives a "cell group selective activation candidate acknowledgement message" sent by a Node B.

For example, the first node sends a "cell group selective activation candidate request message" to the second node, the second node accepts the request and sends a "cell group selective activation candidate acknowledgement message" to the first node.

Optionally, the trigger condition is met before, after, or at the time the first node sends a "candidate cell or candidate cell group configuration activation command". The "candidate cell or candidate cell group configuration activation command" is a command sent to the terminal.

Optionally, the trigger condition is met when the first node receives a ""candidate cell or candidate cell group" configuration activation acknowledgement message" from the second node.

For example, the first node sends a "candidate cell or candidate cell group configuration activation command" to the terminal. For another example, the terminal activates a "candidate cell or candidate cell group" configuration by itself according to the trigger event. After the "candidate cell or candidate cell group" configuration is activated, the second node sends a "candidate cell or candidate cell group configuration activation acknowledgement message" to the first node.

Optionally, the data forwarding information can be set as data path identification information of a terminal, a data bearer ID, a data bearer type, or data transmission status information.

In this embodiment of the disclosure, after the trigger event is met, the first node may send the data forwarding information to the second node via the third node, and the second node may receive the data forwarding information sent by the first node via the third node.

Optionally, the data forwarding information may be at least one of data path identification information of a terminal, a data bearer ID, a data bearer type, or data transmission status information.

Optionally, the data path identification information of the terminal includes at least one of a first data transmission source address or a first data transmission target address in downlink transmission path identification information or at least one of a second data transmission source address or a second data transmission target address in uplink transmission path identification information.

Optionally, the data bearer ID includes at least one of: a session ID, a data flow ID, a service ID, a transmission path ID, or a logical channel ID.

For example, as illustrated in FIG. 4, the DRB may be classified into different bearer types according to a cell group to which data is sent.

Optionally, the bearer type may be an MCG bearer, an SCG bearer, or a split bearer.

Optionally, the data transmission status information includes at least one of a serial number corresponding to first transmission data or a serial number corresponding to first discarded data in downlink data transmission status information or at least one of a serial number corresponding to second transmission data or a serial number corresponding to second discarded data in uplink data transmission status information.

Optionally, the serial number corresponding to the first transmission data and the serial number corresponding to the second transmission data each includes at least one of: an initial transmission data serial number; N serial numbers before the initial transmission data serial number, N being a positive integer; M serial numbers after the initial transmission data serial number, M being a positive integer; or a serial number corresponding to each transmission data. The serial number corresponding to the first discarded data and the serial number corresponding to the second discarded data each includes at least one of: a lower boundary value of serial numbers of discarded data; an upper boundary value of serial numbers of discarded data; or the lower boundary value and the upper boundary value of serial numbers of discarded data.

In embodiments of the disclosure, the second node receives the data forwarding information sent by the first node via the third node. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

As illustrated in FIG. 11, FIG. 11 is a flowchart of a method for transmitting data forwarding information provided by an embodiment of the disclosure. The method is performed by a second node. As illustrated in FIG. 11, the method may include, but is not limited to, the following steps.

At step S111, a predetermined trigger event is a conditional triggered mobility procedure, a first node is a source MN, and the second node is a target node.

It is noted that the conditional triggered mobility procedure includes CHO, CPA or CPC.

At step S112, data forwarding information sent by the source MN to the target node is received.

It should be noted that the introduction of data forwarding information in the disclosure can be found in the relevant contents of the above embodiments and will not be repeated here. The data forwarding information is not limited in the disclosure and can be selected according to actual conditions.

It should be noted that if the first node is a source MN and the second node is a target node, the transmission of data forwarding information from the source MN to the target node is applicable to two different mobility procedures, i.e., CHO and CPA, or CHO and CPC.

The process in which the data forwarding information sent by the source MN is received is illustrated and explained below.

Optionally, for downlink data, data is sent from the source MN to the target SN or from the source MN to the target MN.

Optionally, for uplink data, data is sent from the target SN to the source MN or from the target MN to the source MN.

It should be noted that the specific manner in which the source MN sends the data forwarding information to the target node is not limited in the disclosure and can be selected according to actual conditions.

Optionally, the data forwarding information is first data forwarding information for data transmission between the source MN and the target MN. The target node is the target MN, and the source MN sends the first data forwarding information to the target MN.

Optionally, the data forwarding information is second data forwarding information for data transmission between the source MN and the target SN. The target node is the target SN. The source MN sends second data forwarding information directly to the target SN, or the source MN sends the second data forwarding information to the target MN, and then the target MN forwards the second data forwarding information to the target SN.

In a case where the first node is a source MN, and the second node is a target node, after the first node sends the data forwarding information to the second node, the second node receives the data forwarding information sent by the source MN.

The following is an example of a process in which the source MN sends the data forwarding information to the target node when the trigger event condition is switched to CHO or CPA mobility procedure.

For downlink data, data is sent from the source MN to the target SN or from the source MN to the target MN.

For uplink data, data is sent from the target SN to the source MN or from the target MN to the source MN.

At step a, a source MN (first node) sends data forwarding information to a target node (second node).

The method for transmitting data forwarding information includes at least one of: the source MN sending data forwarding information for data transmission between the source MN and the target MN to the target MN; the source MN sending data forwarding information for data transmission between the source MN and the target SN to the target SN; or the source MN sending data forwarding information for data transmission between the source MN and the target SN to the target MN.

The data forwarding information includes at least one of:
data path identification information of a terminal, in which the data path identification information of the terminal includes at least one of downlink transmission path identification information or uplink transmission path identification information, the downlink transmission path identification information includes at least one of a data transmission source address or a data transmission target address, and the uplink transmission path identification information includes at least one of a data transmission source address or a data transmission target address;
a bearer ID, in which the bearer ID includes at least one of: a session ID, a data flow ID (e.g., a QoS flow ID), a service ID (e.g., a TMGI), a transmission path ID (e.g., an MCG transmission path or an SCG transmission path); or a logical channel ID;
a bearer type, in which the bearer type includes at least one of: an MCG bearer, an SCG bearer, or a split bearer;
downlink data transmission status information, in which the information includes at least one of a serial number corresponding to transmission data or a serial number corresponding to discarded data. The serial number corresponding to transmission data includes at least one of a PDCP serial number, a PDCP HFN or a PDCP COUNT. The serial number corresponding to transmission data includes at least one of: an initial transmission data serial number, an adjacent serial number before the initial transmission data serial number (e.g., if the initial transmission data serial number is N, this serial number is (N-1)); an adjacent serial number after the initial transmission data serial number (e.g., if the initial transmission data serial number is N, this serial number is (N+1)); or a serial number corresponding to each transmission data (e.g., the serial numbers are identified by a bitmap, i.e., each bit indicates one serial number). The serial number corresponding to discarded data includes any one of: a lower boundary value of serial numbers of discarded data (e.g., if the serial number is greater than or equal to this lower boundary value, the corresponding data shall be discarded), an upper boundary value of serial numbers of discarded data (e.g., if the serial number is lower than or equal to this upper boundary value, the corresponding data shall be discarded), or the lower boundary value and the upper boundary value of serial numbers of discarded data (e.g., if the serial number is greater than or equal to this lower boundary value and is lower than or equal to this upper boundary value, the corresponding data shall be discarded); or
uplink data transmission status information, in which the information includes at least one of: a serial number corresponding to transmission data (as described above) or a serial number corresponding to discarded data (as described above), which is not repeated herein.

At step b, when a source MN sends data forwarding information for data transmission between the source MN and a target SN to a target MN, the target MN forwards the data forwarding information for data transmission between the source MN and the target SN to the target SN.

The following is an example of the process in which the source MN sends the data forwarding information to the target node for the trigger event condition of CHO and CPC mobility procedure.

For downlink data, data is sent from the source MN to the target SN, or data is sent from the source MN to the target MN, or data is sent from the source SN to the target SN, or data is sent from the source SN to the source MN and then forwarded by the source MN to the target SN.

For uplink data, data is sent from the target SN to the source MN, or data is sent from the target MN to the source MN, or data is sent from the target SN to the source SN, or data is sent from the target SN to the source MN and then forwarded by the source MN to the source SN.

It should be noted that the introduction of the data forwarding information in the disclosure can be found in the relevant contents in the above embodiments, and will not be repeated herein. The data forwarding information is not limited in the disclosure and can be selected according to actual conditions.

The following is an explanation of a MN data forwarding method.

At step a, a source MN (first node) sends data forwarding information to a target node (second node).

At step b, when the source MN sends data forwarding information for data transmission between the source MN and a target SN to a target MN, the target MN forwards the data forwarding information for data transmission between the source MN and the target SN to the target SN.

The SN data forwarding method is explained below.

At step a, a source SN sends data forwarding information for data transmission between the source SN and a target SN to a source MN.

At step b, the source MN sends the data forwarding information for data transmission between the source SN and the target SN to the target SN according to step a.

In embodiments of the disclosure, the predetermined trigger event is a conditional triggered mobility procedure. When the first node is a source MN, and the second node is a target node, the second node sends the data forwarding information to the target node via the source MN. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

As illustrated in FIG. 12, FIG. 12 is a flowchart of a method for transmitting data forwarding information provided by an embodiment of the disclosure. The method is performed by a second node. As illustrated in FIG. 12, the method may include, but is not limited to, the following steps.

At step S121, a conditional triggered mobility procedure includes CHO and CPC, a first node is a source SN, and the second node is a target SN.

It is noted that if the first node is a source SN, and the second node is a target SN, sending the third data forwarding information from the source SN to the target SN is applicable to both CHO and CPC mobility procedures.

At step S122, third data forwarding information sent by the source SN to the target SN for data transmission between the source SN and the target SN is received or third data forwarding information sent by the source SN to a source MN is received.

The third data forwarding information is sent by the source SN to the source MN.

It should be noted that the introduction of the data forwarding information in the disclosure can be found in the relevant contents in the above embodiments and will not be repeated here. The data forwarding information is not limited in the disclosure and can be selected according to actual conditions.

It is noted that the specific manner for sending the data forwarding information from the source MN to the target node is not limited in the disclosure and can be selected according to actual conditions.

The process of receiving the third data forwarding information sent by the source MN to the target SN is explained below.

Optionally, for downlink data, data is sent from the source MN to the target SN, or data is sent from the source MN to the target MN, or data is sent from the source SN to the target SN, or data is sent from the source SN to the source MN and then forwarded by the source MN to the target SN.

Optionally, for uplink data, data is sent from the target SN to the source MN, or data is sent from the target MN to the source MN, or data is sent from the target SN to the source SN, or data is sent from the target SN to the source MN and then forwarded by the source MN to the source SN.

It is noted that the specific manner for sending the third data forwarding information from the source MN to the target SN is not limited in the disclosure and can be selected according to actual conditions.

Optionally, the source SN sends the third data forwarding information for data transmission between the source SN and the target SN to the target SN.

Optionally, the source SN sends the third data forwarding information to the source MN, and the source MN forwards the third data forwarding information to the target SN.

The second node receives the data forwarding information sent by the source MN.

In embodiments of the disclosure, the conditional triggered mobility procedure includes CHO and CPC, if the first node is a source SN and the second node is a target SN, the second node may receive the third data forwarding information sent by the source SN to the target SN for data transmission between the source SN and the target SN, or the second node may receive the third data forwarding information sent by the source SN to the source MN, which can realize fast data transmission.

As illustrated in FIG. 13, FIG. 13 is a flowchart of a method for transmitting data forwarding information provided by an embodiment of the disclosure. The method is performed by a second node. As illustrated in FIG. 13, the method may include, but is not limited to, the following steps.

At step S131, a predetermined trigger event is a CG selective activation, and the second node is a target node.

It should be noted that if the trigger event is a CG selective activation, the trigger event may be either an SCG selective activation or an MCG selective activation.

Optionally, when the predetermined trigger event is SCG selective activation, the target node is a target SN. Optionally, when predetermined trigger event is an MCG selective activation, the target node is a target MN.

At step S132, fourth data forwarding information sent by a first node to the target node for data transmission between the first node and the target node is received.

It is noted that the first node is not limited in the disclosure and can be selected according to actual conditions.

Optionally, the first node may be a source MN, a source SN, an anchor base station, an anchor MN, or an anchor SN.

In an embodiment of the disclosure, the predetermined trigger event is SCG selective activation. Optionally, for downlink data, data is sent by a source MN, a source SN, an anchor base station, an anchor MN, or an anchor SN to a target SN. Optionally, for uplink data, data is sent by a target SN to a source MN, a source SN, an anchor base station, an anchor MN, or an anchor SN.

In an embodiment of the disclosure, the predetermined trigger event is MCG selective activation. Optionally, for downlink data, data is sent by a source MN, a source SN, an anchor base station, an anchor MN, or an anchor SN to a target MN. Optionally, for uplink data, data is sent by a target MN to a source MN, a source SN, an anchor base station, an anchor MN, or an anchor SN.

It is noted that the specific manner in which the first node sends the fourth data forwarding information for data transmission between the first node and the target node to the target node is not limited in the disclosure and can be selected according to actual conditions.

Optionally, if the first node is a source node such as a source MN or a source SN, the source node sends the fourth data forwarding information to a third node, and the third node forwards the fourth data forwarding information to the target node.

Optionally, if the first node is a source MN(a source SN/an anchor base station/an anchor MN/an anchor SN), the first node (the source MN/the source SN/the anchor base station/the anchor MN/the anchor SN) sends data forwarding information (the fourth data forwarding information) for data transmission between the first node (the source MN/the source SN/the anchor base station/the anchor MN/the anchor SN) and a target SN to the target SN.

As a possible implementation, if the source node is a source MN, the source MN sends the fourth data forwarding information to a third node. The third node is either an anchor base station or an anchor MN.

For example, if the source node is a source MN, the source MN sends the data forwarding information (the fourth data forwarding information) for data transmission between the source MN and a target SN to a third node (an anchor base station/an anchor MN), and the third node (the anchor base station/the anchor MN) sends the data forwarding information (the fourth data forwarding information) for data transmission between the source MN and the target SN to the target SN.

As a possible implementation, if the source node is a source SN, the source SN sends the fourth data forwarding information to a third node. The third node is one of a source MN, an anchor base station, an anchor MN, or an anchor SN.

For example, if the source node is a source SN, the source SN sends the data forwarding information (the fourth data forwarding information) for data transmission between the source SN and a target SN to a third node (a source MN/an anchor base station/an anchor MN/an anchor SN), and the third node (the source MN/the anchor base station/the anchor MN/the anchor SN) forwards the data forwarding information (the fourth data forwarding information) to the target SN.

Further, the second node may receive the fourth data forwarding information sent by the first node for data transmission between the first node and the target node.

In embodiments of the disclosure, the predetermined trigger event is CG selective activation, and the second node is a target node. The second node receives the fourth data forwarding information sent by the first node to the target node for data transmission between the first node and the target node, which can realize fast data transmission.

The following is an example with the trigger event of SCG selective activation.

For downlink data, data is sent from a first node (a source MN/a source SN/an anchor base station/an anchor MN/an anchor SN) to a target SN (a second node).

For uplink data, data is sent from a target SN (a second node) to a first node (a source MN/a source SN/an anchor base station/an anchor MN/an anchor SN).

A first node (a source MN/a source SN/an anchor base station/an anchor MN/an anchor SN) sends the data forwarding information for data transmission between the first node (the source MN/the source SN/the anchor base station/the anchor MN/the anchor SN) and a target SN to the target SN (a second node).

A first node (a source SN) sends the data forwarding information for data transmission between the first node (the source SN) and a target SN to a third node (a source MN/an anchor base station/an anchor MN/an anchor SN), and the third node (the source MN/the anchor base station/the anchor MN/the anchor SN) sends the data forwarding information for data transmission between the source SN and the target SN to the target SN (a second node).

A first node (a source MN) sends the data forwarding information for data transmission between the source MN and a target SN to a third node (an anchor base station or an anchor MN), and the third node (the anchor base station or the anchor MN) sends the data forwarding information for data transmission between the source MN and the target SN to the target SN (a second node).

The following is an example with the trigger event of MCG selective activation.

For downlink data, data is sent from a first node (a source MN/a source SN/an anchor base station/an anchor MN/an anchor SN) to a target MN (a second node).

For uplink data, data is sent from a second node (a target MN) to a first node (a source MN/a source SN/ an anchor base station/an anchor MN/an anchor SN).

A first node (a source MN/a source SN/an anchor base station/an anchor MN/an anchor SN) sends the data forwarding information for data transmission between the first node (the source MN/the source SN/the anchor base station/the anchor MN/the anchor SN) and a target MN to a target SN (a second node).

A first node (a source SN) sends the data forwarding information for data transmission between the source SN and a target MN to a third node (a source MN/an anchor base station/an anchor MN/an anchor SN), and the third node (the source MN/the anchor base station/the anchor MN/the anchor SN) sends the data forwarding information for data transmission between the source SN and the target MN to the target MN (a second node).

A first node (a source MN) sends the data forwarding information for data transmission between the source MN and a target MN to a third node (an anchor base station or an anchor MN), and the third node (the anchor base station or the anchor MN) sends the data forwarding information for data transmission between the source MN and the target MN to the target MN (a second node).

Further, the second node may receive the fourth data forwarding information sent by the first node for data transmission between the first node and the target node.

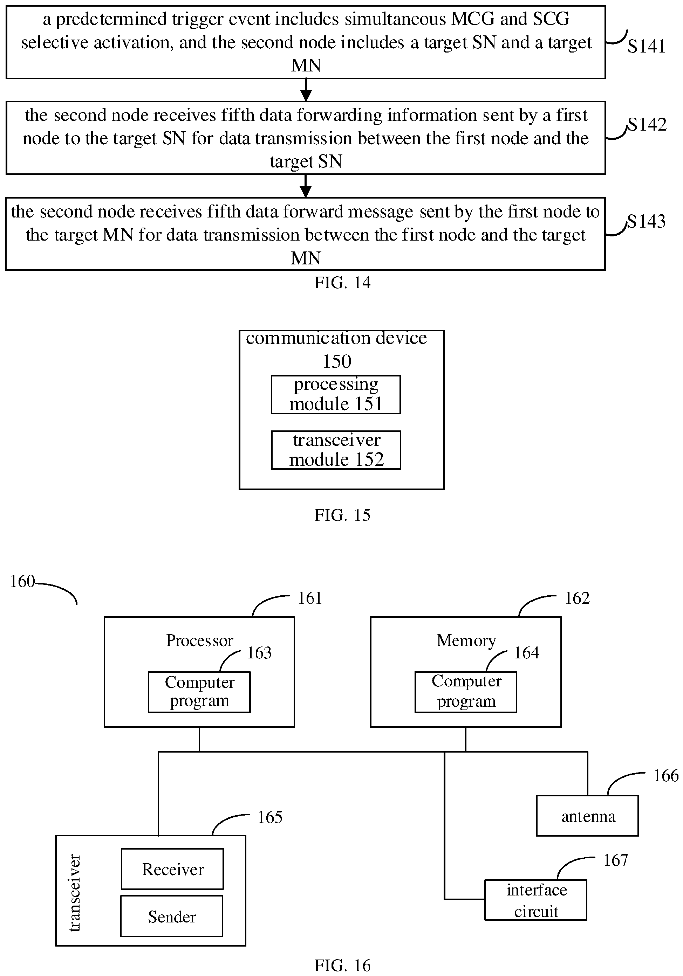

As illustrated in FIG. 14, FIG. 14 is a flowchart of a method for transmitting data forwarding information provided by an embodiment of the disclosure. The method is performed by a second node. As illustrated in FIG. 14, the method may include, but is not limited to, the following steps.

At step S141, a predetermined trigger event includes simultaneous MCG and SCG selective activation, and the second node includes a target SN and a target MN.

It is noted that if the predetermined trigger event includes simultaneous MCG and SCG selective activation, the second node includes a target SN and a target MN.

At step S142, the second node receives fifth data forwarding information sent by a first node to the target SN for data transmission between the first node and the target SN.

Optionally, the first node is one of a source MN, a source SN, an anchor base station, an anchor MN or an anchor SN.

Optionally, the first node (a source MN/a source SN/an anchor base station/an anchor MN/an anchor SN) sends data forwarding information (the fifth data forwarding information) for data transmission between the first node (the source MN/the source SN/the anchor base station/the anchor MN/the anchor SN) and a target SN to the target SN.

At step S143, the second node receives the fifth data forward message sent by the first node to a target MN for data transmission between the first node and the target MN.

Optionally, the first node is one of a source MN, a source SN, an anchor base station, an anchor MN or an anchor SN.

Optionally, the first node (the source MN/the source SN/ the anchor base station/the anchor MN/the anchor SN) sends the data forwarding information (the fifth data forwarding information) for data transmission between the first node (the source MN/the source SN/ the anchor base station/the anchor MN/the anchor SN) and a target MN to the target MN.

Optionally, if the first node is a source node, for any one of a target SN and a target MN, the source node sends fourth data forwarding information to a third node, and the third node forwards the fourth data forwarding information to a target node.

In embodiments of the disclosure, if the predetermined trigger event is simultaneous MCG and SCG selective activation, and the second node includes a target SN and a target MN, the second node receives the fifth data forwarding information sent by the first node to the target SN for data transmission between the first node and the target SN, and the second node receives the fifth data forwarding information sent by the first node to the target MN for data transmission between the first node and the target MN, which can realize fast data transmission.

In the above-described embodiments of the disclosure, the method provided in the embodiments of the disclosure is described from the perspectives of the network device and the terminal, respectively. In order to implement the functions in the methods provided in the above embodiments of the disclosure, the terminal and the network device may include a hardware structure and a software module, and implement each of the above functions in the form of a hardware structure, a software module, or a combination of the hardware structure and the software module. A certain function of the above-described functions may be performed by a hardware structure, a software module, or a combination of the hardware structure and the software module.

As illustrated in FIG. 15, FIG. 15 is a structural diagram of a communication device 150 provided by an embodiment of the disclosure. The communication device 150 shown in FIG. 15 may include a transceiver module 151 and a processing module 152. The transceiver module 151 may include a sending module and/or a receiving module. The sending module is used to implement a sending function, and the receiving module is used to implement a receiving function. The transceiver module 151 may implement the sending function and/or the receiving function.

The communication device 150 may be a terminal, a device in the terminal, or a device capable of being used together with the terminal.

In a case where the communication device 150 is a terminal,
the transceiver module 151 is configured to send data forwarding information to a second node according to a predetermined trigger event.

Optionally, the transceiver module 151 is further configured to: send the data forwarding information to the second node according to the predetermined trigger event via a third node.

Optionally, the predetermined trigger event includes any one of: SCG selective activation; MCG selective activation; simultaneous MCG and SCG selective activation; or a simultaneous conditional triggered mobility procedure of MCG and SCG.

Optionally, the data forwarding information includes at least one of: data path identification information of a terminal; a data bearer ID; a data bearer type; or data transmission status information.

Optionally, the data path identification information of the terminal includes at least one of: downlink transmission path identification information, in which the downlink transmission path identification information includes at least one of a first data transmission source address or a first data transmission target address; or uplink transmission path identification information, in which the uplink transmission path identification information includes at least one of a second data transmission source address or a second data transmission target address.

Optionally, the data bearer ID includes at least one of: a session ID; a data flow ID; a service ID; a transmission path ID; or a logical channel ID.

Optionally, the data transmission status information includes at least one of: downlink data transmission status information, in which the downlink data transmission status information includes at least one of a serial number corresponding to first transmission data or a serial number corresponding to first discarded data; or uplink data transmission status information, in which the uplink data transmission status information includes at least one of a serial number corresponding to second transmission data or a serial number corresponding to second discarded data.

Optionally, the serial number corresponding to the first transmission data and the serial number corresponding to the second transmission data each includes at least one of: an initial transmission data serial number; N serial numbers before the initial transmission data serial number, N being a positive integer;
M serial numbers after the initial transmission data serial number, M being a positive integer; or a serial number corresponding to each transmission data. The serial number corresponding to the first discarded data and the serial number corresponding to the second discarded data each includes at least one of: a lower boundary value of serial numbers of discarded data; an upper boundary value of serial numbers of discarded data; or the lower boundary value and the upper boundary value of serial numbers of discarded data.

Optionally, the predetermined trigger event is the conditional triggered mobility procedure, the first node is a source MN, and the second node is a target node. Sending the data forwarding information to the second node according to the predetermined trigger event includes: the source MN sending the data forwarding information to the target node.

Optionally, in response to the target node being a target MN, the data forwarding information is first data forwarding information sent by the source MN to the target MN, and in response to the target node being a target SN, the data forwarding information is second data forwarding information sent by the source MN directly to the target SN, or second data forwarding information sent by the source MN to the target SN via the target MN.

Optionally, the conditional triggered mobility procedure includes CHO and CPC, the first node is a source SN, and the second node is a target SN. Sending the data forwarding information to the second node according to the predetermined trigger event includes: the source SN sending third data forwarding information for data transmission between the source SN and the target SN to the target SN; or, the source SN sending the third data forwarding information to a source MN, and the source MN forwarding the third data forwarding information to the target SN.

Optionally, the predetermined trigger event is CG selective activation, and the second node is a target node. Sending the data forwarding information to the second node according to the predetermined trigger event includes: the first node sending fourth data forwarding information for data transmission between the first node and the target node to the target node, in which the first node is one of a source MN, a source SN, an anchor base station, an anchor MN or an anchor SN.

Optionally, the first node is a source node, and the first node sending the fourth data forwarding information to the target node includes: the source node sending the fourth data forwarding information to a third node, and the third node forwarding the fourth data forwarding information to the target node.

Optionally, in response to the source node being the source MN, the source MN sends the fourth data forwarding information to the third node, the third node being either an anchor base station or an anchor MN; or in response to the source node being a source SN, the source SN sends the fourth data forwarding information to the third node, the third node being one of a source MN, an anchor base station, an anchor MN or an anchor SN.

Optionally, in response to the predetermined trigger event being SCG selective activation, the target node is a target SN; or in response to the predetermined trigger event being MCG selective activation, the target node is a target MN.

Optionally, the predetermined trigger event is simultaneous MCG and SCG selective activation, and the second node includes a target SN and a target MN. Sending the data forwarding information to the second node according to the predetermined trigger event includes: the first node sending fifth data forwarding information for data transmission between the first node and the target SN to the target SN; or the first node sending fifth data forwarding information for data transmission between the first node and the target MN to the target MN; in which the first node is one of a source MN, a source SN, an anchor base station, an anchor MN or an anchor SN.

Optionally, the first node is a source node, for any target node of the target SN and target MN, the first node sending the fifth data forwarding information to the target node, includes: the source node sending the fourth data forwarding information to a third node, and the third node forwarding the fourth data forwarding information to the target node.

In this embodiment of the disclosure, the first node sends the data forwarding information to the second node according to the predetermined trigger event. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

In a case where the communication device 150 is a terminal,

the transceiver module 151 is configured to receive data forwarding information sent by a first node according to a predetermined trigger event.

Optionally, the transceiver module 151 is configured to receive the data forwarding information sent by the first node via a third node.

Optionally, the predetermined trigger event includes any one of: SCG selective activation; MCG selective activation; simultaneous MCG and SCG selective activation; or a simultaneous conditional triggered mobility procedure of MCG and SCG.

Optionally, the data forwarding information includes at least one of: data path identification information of a terminal; a data bearer ID; a data bearer type; or data transmission status information.

Optionally, the data path identification information of the terminal includes at least one of: downlink transmission path identification information, in which the downlink transmission path identification information includes at least one of a first data transmission source address or a first data transmission target address; or uplink transmission path identification information, in which the uplink transmission path identification information includes at least one of a second data transmission source address or a second data transmission target address.

Optionally, the data bearer ID includes at least one of: a session ID; a data flow ID; a service ID; a transmission path ID; or a logical channel ID.

Optionally, the data transmission status information includes at least one of: downlink data transmission status information, in which the downlink data transmission status information includes at least one of a serial number corresponding to first transmission data or a serial number corresponding to first discarded data; or uplink data transmission status information, in which the uplink data transmission status information includes at least one of a serial number corresponding to second transmission data or a serial number corresponding to second discarded data.

Optionally, the serial number corresponding to the first transmission data and the serial number corresponding to the second transmission data each includes at least one of: an initial transmission data serial number; N serial numbers before the initial transmission data serial number, N being a positive integer;
M serial numbers after the initial transmission data serial number, M being a positive integer; or a serial number corresponding to each transmission data. The serial number corresponding to the first discarded data and the serial number corresponding to the second discarded data each includes at least one of: a lower boundary value of serial numbers of discarded data; an upper boundary value of serial numbers of discarded data; or the lower boundary value and the upper boundary value of serial numbers of discarded data.

Optionally, the predetermined trigger event is the conditional triggered mobility procedure, the first node is a source MN, and the second node is a target node. Receiving the data forwarding information sent by the first node according to the predetermined trigger event, includes: receiving the data forwarding information sent by the source MN.

Optionally, the transceiver module 151 is configured to: in response to the target node being a target MN, and the data forwarding information being first data forwarding information sent by the source MN to the target MN, receive the first data forwarding information directly sent by the source MN; and in response to the target node being a target SN, and the data forwarding information being second data forwarding information sent by the source MN directly to the target SN or second data forwarding information sent by the source MN to the target SN via the target MN, receive the second data forwarding information sent directly by the source SN, or receive the second data forwarding information sent by the source MN to the target SN via the target MN.

Optionally, the conditional triggered mobility procedure includes CHO and CPC, the first node is a source SN, and the second node is a target SN. Receiving the data forwarding information sent by the first node according to the predetermined trigger event includes: receiving third data forwarding information sent by the source SN for data transmission between the source SN and the target SN; or, receive the third data forwarding information sent by the source SN to the source MN and then forwarded by the source MN.

Optionally, the predetermined trigger event is CG selective activation, and the second node is a target node. Receiving the data forwarding information sent by the first node according to the predetermined trigger event includes: receiving fourth data forwarding information sent by the first node for data transmission between the first node and the target node, in which the first node is one of a source MN, a source SN, an anchor base station, an anchor MN or an anchor SN.

Optionally, the first node is a source node, and receiving the fourth data forwarding information sent by the first node includes: receiving the fourth data forwarding information sent by the source node to a third node and then forwarded by the third node.

Optionally, in response to the source node being the source MN, the third node is either an anchor base station or an anchor MN,
in response to the source node being a source SN, the third node is one of a source MN, an anchor base station, an anchor MN or an anchor SN.

Optionally, in response to the predetermined trigger event being SCG selective activation, the target node is a target SN, and in response to the predetermined trigger event being MCG selective activation, the target node is a target MN.

Optionally, the predetermined trigger event is simultaneous MCG and SCG selective activation, and the second node includes a target SN and a target MN. Receiving the data forwarding information sent by the first node according to the predetermined trigger event includes: in response to the second node being the target SN, the target SN receiving fifth data forwarding information sent by the first node for data transmission between the first node and the target SN; in response to the second node being the target MN, the target MN receiving fifth data forwarding information sent by the first node for data transmission between the first node and the target MN; in which the first node is one of a source MN, a source SN, an anchor base station, an anchor MN or an anchor SN.

Optionally, the first node is a source node, and the method further includes:
for any target node of the target SN and target MN, receiving the fifth data forwarding information sent by the first node, includes:
receiving the fifth data forwarding information sent by the source node to a third node and then forwarded by the third node.

In this embodiment of the disclosure, the second node receives the data forwarding information sent by the first node according to the predetermined trigger event. Through negotiation between network nodes, when the network updates a pre-configured cell or cell group configuration, fast data transmission can be achieved through data forwarding, path switching and other functions. The data forwarding and path switching can be performed in the case where several cell groups are changed simultaneously.

As illustrated in FIG. 16, FIG. 16 is a schematic diagram of another communication device 160 according to an embodiment of the disclosure. The communication device 160 may be a network device, a terminal, or a chip, a chip system or a processor that supports the network device to realize the above-described methods, or a chip, a chip system or a processor that supports the terminal to realize the above-described methods. The device may be used to realize the methods described in the above method embodiments with reference to the description of the above-described method embodiments.

The communication device 160 may include one or more processors 161. The processor 161 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, DU, or CU), executing computer programs, and processing data of the computer programs.

Optionally, the communication device 160 may include one or more memories 162 on which computer programs 164 may be stored. The processor 161 executes the computer programs 164 to cause the communication device 160 to perform the methods described in the above method embodiments. Optionally, data may be stored in the memory 162. The communication device 160 and the memory 162 may be provided separately or may be integrated together.

Optionally, the communication device 160 may also include a transceiver 165 and an antenna 166. The transceiver 165 may be referred to as a transceiver unit, a transceiver machine, or a transceiver circuit, for realizing the transceiver function. The transceiver 165 may include a receiver and a sender. The receiver may be referred to as a receiver machine or a receiving circuit, for realizing the receiving function. The sender may be referred to as a sender machine or a sending circuit, for realizing the sending function.

Optionally, the communication device 160 may also include one or more interface circuits 167. The interface circuits 167 are used to receive code instructions and send the code instructions to the processor 161. The processor 161 runs the code instructions to cause the communication device 160 to perform the methods described in the method embodiments.

In an implementation, the processor 161 may include a transceiver for implementing the receiving and sending functions. The transceiver may be, for example, a transceiver circuit, an interface, or an interface circuit. The transceiver circuit, interface, or interface circuit for implementing the receiving and sending functions may be separated or may be integrated together. The transceiver circuit, interface, or interface circuit described above may be used for code/data reading and writing, or may be used for signal transmission or delivery.

In an implementation, the processor 161 may store computer programs 163. The processor 161 executes the computer programs 163 to cause the communication device 160 to perform the methods described in the above method embodiments. The computer programs 163 may be solidified in the processor 161, in which case the processor 161 may be implemented by hardware.

In an implementation, the communication device 160 may include circuits. The circuits may implement the sending, receiving or communicating function in the preceding method embodiments. The processor and transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a sending device or a receiving device (e.g., the receiver in the above method embodiments), but the scope of the communication device described in the disclosure is not limited thereto, and the structure of the communication device may not be limited by FIG. 16. The communication device may be a stand-alone device or may be part of a larger device. For example, the communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

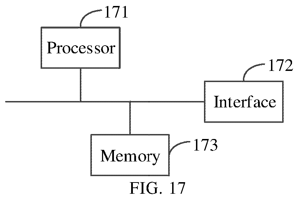

The case where the communication device may be a chip or a chip system may be referred to the schematic diagram of a chip shown in FIG. 17. The chip shown in FIG. 17 includes a processor 171 and an interface 172. There may be one or more processors 171, and there may be multiple interfaces 172.

Optionally, the chip may also include a memory 173 used for storing necessary computer programs and data.

The chip is used to implement the function of any of the method embodiments described above when being executed.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a communication system for PSCCH transmission. The system includes a communication device as a terminal in the preceding embodiment of FIG. 15, or, the system includes a communication device as a terminal in the preceding embodiment of FIG. 17.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure may be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in the disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above mentioned are only specific implementations of the disclosure, but the scope of protection of the disclosure is not limited thereto. Those skilled in the art that are familiar with the technical field can easily think of changes or substitutions within the technical scope disclosed in the disclosure, which shall be covered by the scope of protection of the disclosure. Therefore, the scope of protection of the disclosure shall be based on the scope of protection of the stated claims.

## Claims

1. A method for transmitting data forwarding information, performed by a first node, comprising:
sending data forwarding information to a second node according to a predetermined trigger event.

2. The method of claim 1, wherein sending the data forwarding information to the second node according to the predetermined trigger event, comprises:
sending the data forwarding information to the second node according to the predetermined trigger event via a third node.

3. The method of claim 1 or 2, wherein the predetermined trigger event comprises any one of:
secondary cell group (SCG) selective activation;
master cell group (MCG) selective activation;
simultaneous MCG and SCG selective activation; or
a simultaneous conditional triggered mobility procedure of MCG and SCG.

4. The method of claim 1 or 2, wherein the data forwarding information comprises at least one of:
data path identification information of a terminal;
a data bearer identity (ID);
a data bearer type; or
data transmission status information.

5. The method of claim 4, wherein the data path identification information of the terminal comprises at least one of:
downlink transmission path identification information, wherein the downlink transmission path identification information comprises at least one of a first data transmission source address or a first data transmission target address; or
uplink transmission path identification information, wherein the uplink transmission path identification information comprises at least one of a second data transmission source address or a second data transmission target address.

6. The method of claim 4, wherein the data bearer ID comprises at least one of:
a session ID;
a data flow ID;
a service ID;
a transmission path ID; or
a logical channel ID.

7. The method of claim 4, wherein the data transmission status information comprises at least one of:
downlink data transmission status information, wherein the downlink data transmission status information comprises at least one of a serial number corresponding to first transmission data or a serial number corresponding to first discarded data; or
uplink data transmission status information, wherein the uplink data transmission status information comprises at least one of a serial number corresponding to second transmission data or a serial number corresponding to second discarded data.

8. The method of claim 7, wherein the serial number corresponding to the first transmission data and the serial number corresponding to the second transmission data each comprises at least one of:
an initial transmission data serial number;
N serial numbers before the initial transmission data serial number, N being a positive integer;
M serial numbers after the initial transmission data serial number, M being a positive integer; or
a serial number corresponding to each transmission data; and
the serial number corresponding to the first discarded data and the serial number corresponding to the second discarded data each comprises at least one of:
a lower boundary value of serial numbers of discarded data;
an upper boundary value of serial numbers of discarded data; or
the lower boundary value and the upper boundary value of serial numbers of discarded data.

9. The method of claim 1 or 2, wherein the predetermined trigger event is a conditional triggered mobility procedure, the first node is a source master node (MN), and the second node is a target node; and
sending the data forwarding information to the second node according to the predetermined trigger event comprises:
sending, by the source MN, the data forwarding information to the target node.

10. The method of claim 9, wherein
in response to the target node being a target MN, the data forwarding information is first data forwarding information sent by the source MN to the target MN; and
in response to the target node being a target secondary node (SN), the data forwarding information is second data forwarding information sent by the source MN directly to the target SN, or second data forwarding information sent by the source MN to the target SN via the target MN.

11. The method of claim 1 or 2, wherein a conditional triggered mobility procedure comprises conditional handover (CHO) and conditional primary secondary cell (PSCell) change (CPC), the first node is a source SN, and the second node is a target SN; and
sending the data forwarding information to the second node according to the predetermined trigger event comprises:
sending, by the source SN, third data forwarding information for data transmission between the source SN and the target SN to the target SN; or,
sending, by the source SN, the third data forwarding information to a source MN, and forwarding, by the source MN, the third data forwarding information to the target SN.

12. The method of claim 1 or 2, wherein the predetermined trigger event is CG selective activation, and the second node is a target node; and
sending the data forwarding information to the second node according to the predetermined trigger event comprises:
sending, by the first node, fourth data forwarding information for data transmission between the first node and the target node to the target node;
wherein the first node is one of a source MN, a source SN, an anchor base station, an anchor MN or an anchor SN.

13. The method of claim 12, wherein the first node is a source node, and sending, by the first node, the fourth data forwarding information to the target node comprises:
sending, by the source node, the fourth data forwarding information to the third node, and forwarding, by the third node, the fourth data forwarding information to the target node.

14. The method of claim 13, further comprising:
in response to the source node being the source MN, sending, by the source MN, the fourth data forwarding information to the third node, wherein the third node is one of an anchor base station or an anchor MN; and
in response to the source node being the source SN, sending, by the source SN, the fourth data forwarding information to the third node, wherein the third node is one of a source MN, an anchor base station, an anchor MN or an anchor SN.

15. The method of claim 12, wherein,
in response to the predetermined trigger event being SCG selective activation, the target node is a target SN; and
in response to the predetermined trigger event being MCG selective activation, the target node is a target MN.

16. The method of claim 1 or 2, wherein the predetermined trigger event is simultaneous MCG and SCG selective activation, and the second node comprises a target SN and a target MN; and
sending the data forwarding information to the second node according to the predetermined trigger event comprises:
sending, by the first node, fifth data forwarding information for data transmission between the first node and the target SN to the target SN; and
sending, by the first node, fifth data forwarding information for data transmission between the first node and the target MN to the target MN;
wherein the first node is one of a source MN, a source SN, an anchor base station, an anchor MN or an anchor SN.

17. The method of claim 16, wherein the first node is a source node, and
sending, by the first node, the fifth data forwarding information to the target node being any of the target SN and target MN, comprises:
sending, by the source node, fourth data forwarding information to the third node, and forwarding, by the third node, the fourth data forwarding information to the target node.

18. A method for transmitting data forwarding information, performed by a second node, comprising:
receiving data forwarding information sent by a first node according to a predetermined trigger event.

19. The method of claim 18, wherein receiving the data forwarding information sent by the first node according to the predetermined trigger event, comprises:
receiving the data forwarding information sent by the first node via a third node.

20. The method of claim 18 or 19, wherein the predetermined trigger event comprises any one of:
secondary cell group (SCG) selective activation;
master cell group (MCG) selective activation;
simultaneous MCG and SCG selective activation; or
a simultaneous conditional triggered mobility procedure of MCG and SCG.

21. The method of claim 18 or 19, wherein the data forwarding information comprises at least one of:
data path identification information of a terminal;
a data bearer identity (ID);
a data bearer type; or
data transmission status information.

22. The method of claim 21, wherein the data path identification information of the terminal comprises at least one of:
downlink transmission path identification information, wherein the downlink transmission path identification information comprises at least one of a first data transmission source address or a first data transmission target address; or
uplink transmission path identification information, wherein the uplink transmission path identification information comprises at least one of a second data transmission source address or a second data transmission target address.

23. The method of claim 21, wherein the data bearer ID comprises at least one of:
a session ID;
a data flow ID;
a service ID;
a transmission path ID; or
a logical channel ID.

24. The method of claim 21, wherein the data transmission status information comprises at least one of:
downlink data transmission status information, wherein the downlink data transmission status information comprises at least one of a serial number corresponding to first transmission data or a serial number corresponding to first discarded data; or
uplink data transmission status information, wherein the uplink data transmission status information comprises at least one of a serial number corresponding to second transmission data or a serial number corresponding to second discarded data.

25. The method of claim 24, wherein the serial number corresponding to the first transmission data and the serial number corresponding to the second transmission data each comprises at least one of:
an initial transmission data serial number;
N serial numbers before the initial transmission data serial number, N being a positive integer;
M serial numbers after the initial transmission data serial number, M being a positive integer; or
a serial number corresponding to each transmission data; and
the serial number corresponding to the first discarded data and the serial number corresponding to the second discarded data each comprises at least one of:
a lower boundary value of serial numbers of discarded data;
an upper boundary value of serial numbers of discarded data; or
the lower boundary value and the upper boundary value of serial numbers of discarded data.

26. The method of claim 18 or 19, wherein the predetermined trigger event is a conditional triggered mobility procedure, the first node is a source master node (MN), and the second node is a target node; and
receiving the data forwarding information sent by the first node according to the predetermined trigger event, comprises:
receiving the data forwarding information sent by the source MN.

27. The method of claim 26, wherein receiving the data forwarding information sent by the source MN, comprises:
in response to the target node being a target MN, and the data forwarding information being first data forwarding information sent by the source MN to the target MN, receiving the first data forwarding information directly sent by the source MN; and
in response to the target node being a target secondary node (SN), and the data forwarding information being second data forwarding information sent by the source MN directly to the target SN or second data forwarding information sent by the source MN to the target SN via the target MN, receiving the second data forwarding information sent directly by the source SN, or receiving the second data forwarding information sent by the source MN to the target SN via the target MN.

28. The method of claim 18 or 19, wherein a conditional triggered mobility procedure comprises conditional handover (CHO) and conditional primary secondary cell (PSCell) change (CPC), the first node is a source SN, and the second node is a target SN;
receiving the data forwarding information sent by the first node according to the predetermined trigger event comprises:
receiving third data forwarding information sent by the source SN for data transmission between the source SN and the target SN; or,
receiving the third data forwarding information sent by the source SN to the source MN and then forwarded by the source MN.

29. The method of claim 18 or 19, wherein the predetermined trigger event is CG selective activation, and the second node is a target node; and
receiving the data forwarding information sent by the first node according to the predetermined trigger event comprises:
receiving fourth data forwarding information sent by the first node for data transmission between the first node and the target node;
wherein the first node is one of a source MN, a source SN, an anchor base station, an anchor MN or an anchor SN.

30. The method of claim 29, wherein the first node is a source node, and receiving the fourth data forwarding information sent by the first node comprises:
receiving the fourth data forwarding information sent by the source node to the third node and then forwarded by the third node.

31. The method of claim 30, wherein,
in response to the source node being the source MN, the third node is one of an anchor base station or an anchor MN; and
in response to the source node being the source SN, the third node is one of a source MN, an anchor base station, an anchor MN or an anchor SN.

32. The method of claim 29, wherein,
in response to the predetermined trigger event being SCG selective activation, the target node is a target SN; and
in response to the predetermined trigger event being MCG selective activation, the target node is a target MN.

33. The method of claim 18 or 19, wherein the predetermined trigger event is simultaneous MCG and SCG selective activation, and the second node comprises a target SN and a target MN; and
receiving the data forwarding information sent by the first node according to the predetermined trigger event comprises:
in response to the second node being the target SN, receiving, by the target SN, fifth data forwarding information sent by the first node for data transmission between the first node and the target SN; and
in response to the second node being the target MN, receiving, by the target MN, fifth data forwarding information sent by the first node for data transmission between the first node and the target MN;
wherein the first node is one of a source MN, a source SN, an anchor base station, an anchor MN or an anchor SN.

34. The method of claim 33, wherein the first node is a source node, and
receiving, by the target node being any of the target SN and target MN, the fifth data forwarding information sent by the first node, comprises:
receiving the fifth data forwarding information sent by the source node to the third node and then forwarded by the third node.

35. A communication device, comprising:
a transceiver module, configured to send data forwarding information to a second node according to a predetermined trigger event.

36. A communication device, comprising:
a transceiver module, configured to receive data forwarding information sent by a first node according to a predetermined trigger event.

37. A communication device, comprising a processor and a memory having a computer program stored thereon, wherein when the computer program is executed by the processor, the device is caused to implement the method of any one of claims 1-17.

38. A communication device, comprising a processor and a memory having a computer program stored thereon, wherein when the computer program is executed by the processor, the device is caused to implement the method of any one of claims 18-37.

39. A communication device, comprising a processor and an interface circuit;
wherein the interface circuit is configured to receive code instructions and send the code instructions to the processor; and
the processor is configured to run the code instructions to perform the method of any one of claims 1-17.

40. A communication device, comprising a processor and an interface circuit; wherein the interface circuit is configured to receive code instructions and send the code instructions to the processor; and
the processor is configured to run the code instructions to perform the method of any one of claims 18-34.

41. A computer-readable storage medium for storing instructions, wherein when the instructions are executed, the method of any one of claims 1-17 is implemented.

42. A computer-readable storage medium for storing instructions, wherein when the instructions are executed, the method of any one of claims 18-34 is implemented.
